# EUROPÄISCHE PATENTSCHRIFT

(11) **EP 4 169 694 B1**
(45) Veröffentlichungstag und Bekanntmachung des Hinweises auf die Patenterteilung: **24.07.2024**
(21) Anmeldenummer: 22202323.6
(22) Anmeldetag: 18.10.2022
(51) Int. Cl.: B29C 49/42, B29C 49/78, B29C 49/06, B29K 67/00, B29L 31/00, B29C 49/48, B29C 49/12

(54) **VERFAHREN UND VORRICHTUNG ZUM BLASFORMEN VON BEHÄLTNISSEN MIT BEWEGLICHEM BODENTEIL**
METHOD AND DEVICE FOR BLOW MOULDING CONTAINERS WITH A MOVABLE BASE PART
PROCÉDÉ ET DISPOSITIF DE MOULAGE PAR SOUFFLAGE DE RÉCIPIENTS AVEC PARTIE FOND MOBILE

(30) Priorität: 21.10.2021 DE 102021127436
(43) Veröffentlichungstag der Anmeldung: 26.04.2023
(73) Patentinhaber: Krones AG, 93073 Neutraubling (DE)
(72) Erfinder: Betz, Christian, 93073 Neutraubling (DE); Hengl, Benedikt, 93073 Neutraubling (DE); Vogler, Daniel, 93073 Neutraubling (DE); Meier, Dominik, 93073 Neutraubling (DE); Knapp, Peter, 93073 Neutraubling (DE)
(74) Vertreter: Hannke Bittner & Partner mbB Regensburg

(56) Entgegenhaltungen:
- EP-A1- 1 727 661
- EP-A1- 2 722 153
- EP-A1- 3 888 884
- US-A1- 2008 191 394
- US-A1- 2021 146 595

## Beschreibung

Die vorliegende Erfindung bezieht sich auf ein Verfahren und eine Vorrichtung zum Umformen von Kunststoffvorformlingen zu Kunststoffbehältnissen und insbesondere Kunststoffflaschen gemäß den jeweiligen Oberbegriffen der unabhängigen Ansprüche 1 und 10. Derartige Verfahren und Vorrichtungen sind aus dem Stand der Technik seit Langem bekannt. Dabei werden üblicherweise erwärmte Kunststoffvorformlinge in Blasformen eingegeben und innerhalb dieser Blasformen mit Druck beaufschlagt, sodass ein Kunststoffbehältnis bzw. eine Kunststoffflasche ausgeformt werden kann. Dabei werden die Kunststoffvorformlinge üblicherweise mit unterschiedlichen Druckstufen beaufschlagt. So ist es beispielsweise bekannt, dass zunächst ein Vorblasdruck angelegt wird, der zur ersten Ausdehnung des Behältnisses dient, anschließend ein Zwischenblasdruck und schließlich ein Fertigblasdruck. Weiterhin ist es aus dem Stand der Technik bekannt, dass in die Behältnisse, zu deren Expansion, eine sogenannte Reckstange eingefahren wird, um die Behältnisse zu dehnen. Daneben sind aus dem Stand der Technik auch Verfahren bekannt, bei denen während des Expansionsprozesses ein Bodenteil der Blasform auf die Behältnisse zugestellt wird. Derartige Verfahren werden auch als Active-Base-Verfahren bezeichnet. Die Dokumenten EP2722153A1, EP1727661 A1, US2021/146595A1 und US2008/191394A1 beschreiben derartigen Verfahren und Vorrichtungen gemäß dem Stand der Technik.

Bei einem erfindungsgemäßen Verfahren zum Umformen von Kunststoffvorformlingen zu Kunststoffflaschen umfasst dieses die Schritte:
- Einbringen eines zu expandierenden Kunststoffvorformlings in eine Blasform, wobei diese Blasform wenigstens zwei Seitenteile und ein Bodenteil aufweist;
- Einführen einer Reckstange durch die Mündung des Kunststoffvorformlings in das Innere des Kunststoffvorformlings, um diesen in seiner Längsrichtung zu dehnen;
- Beaufschlagen des Kunststoffvorformlings mit einem ersten Druckniveau P1;
- Beaufschlagen des Kunststoffvorformlings mit mindestens einem zweiten Druckniveau (P+), wobei das zweite Druckniveau (P+) von dem ersten Druckniveau P1 abweicht und bevorzugt höher als das erste Druckniveau ist,
- Beaufschlagen des Kunststoffvorformlings mit einem dritten Druckniveau P2, wobei dieses dritte Druckniveau P2 von dem zweiten Druckniveau (P+) abweicht und bevorzugt höher als das zweite Druckniveau ist,
- insbesondere
   wobei jedem Druckniveau ein Druckreservoir zugeordnet ist,
   wobei das Verfahren einen ersten und einen zweiten Betriebsmodus aufweist, wobei die jeweiligen Betriebsmodi wahlweise von einem Bediener, je nach Anforderung, ausgewählt werden, dadurch gekennzeichnet, dass
   in dem ersten Betriebsmodus, also in einem Quality Betrieb, eine Verbindung zwischen einem Ventilblock und einem Druckreservoir des zweiten Druckniveaus in nur eine Richtung, von einem Ventilblock in Richtung des Druckreservoir, also einem Druckluft- Recycling hergestellt wird ist, und
   in einem zweiten Betriebsmodus, also einem Efficiency Ansatz, eine Verbindung zwischen dem Ventilblock und dem Druckreservoir des zweiten Druckniveaus in beide Richtungen, also von dem Ventilblock in Richtung des Druckreservoir und von dem Druckreservoir in Richtung des Ventilblocks, hergestellt wird.

Gemäß zumindest einer Ausführungsform ist das Verfahren dadurch gekennzeichnet, dass Druckkanäle mindestens zwei Druckreservoirs über ein Verbindungsventil miteinander verbindbar und/oder verbunden sind, sodass mittels dieses eines dem Verbindungsventil zugeordneter Druckanales zumindest zwei Drücke von Druckkanälen zueinander gesteuert und/oder geregelt recyclebar sind, insbesondere wobei eine Befüllung zweier Druckluftreservoirs über ein einziges Ventil, zum Beispiel das Verbindungsventil erfolgt.

Das kann heißen, dass die Befüllung zweier Druckluftreservoirs über ein einziges Ventil erfolgt.

Bei der Abfüllung sensibler Produkte wird ein Umformungsvorgang innerhalb eines Reinraums durchgeführt. Auch ist es bekannt, bereits vor dem Blasvorgang oder auch nach dem Blasvorgang durch Beaufschlagung mit einem Sterilisationsmedium, wie beispielsweise Wasserstoffperoxid, zu sterilisieren.

Die insbesondere in der Blasformmaschine nötige Druckluft bzw. deren Erzeugung ist energetisch aufwendig und verursacht deshalb in einer Blasmaschine und insbesondere einer Streckblasmaschine einen großen Anteil der Betriebskosten. Beispielsweise sind zur Herstellung von PET-Flaschen aus Kunststoffvorformlingen Drücke bis zu 40 bar erforderlich. Einsparpotentiale ergeben sich durch verschiedene Ansätze zur Wiederverwendung der erzeugten Druckluft auf bestimmten Druckniveaus, also einem Recyclen. So ist es beispielsweise bekannt, dass für den Expansionsvorgang der Kunststoffvorformlinge unterschiedliche Druckniveaus verwendet werden und beispielsweise der Druck aus einem höheren Druckniveau recycelt werden kann in ein niedrigeres Druckniveau. So wurden bei der Anmelderin für Streckblasmaschinen derartige Druckluftrecyclingsysteme entwickelt, die je nach Ausführung Teile der Druckluft maschinenintern wiederverwenden, aber auch zum Teil für externe Anwendungen zur Verfügung stehen. Derartige Vorrichtungen sind aus dem internen Stand der Technik der Anmelderin bekannt.

Aktuell gibt es im Standardprozess drei Druckstufen. P1 als Vorblasdruckniveau, Pi als Zwischenblasdruckniveau und P2 als Fertigblasdruckniveau. Jedes dieser Druckniveaus besitzt einen eigenen Ringkanal und ein Ventil am Ventilblock der Blasstation, um den Druck in das Kundenobjekt (Preform/Flasche) leiten zu können.

Der Ventilblock der neuen Contiform NX-Generation soll nach jetzigem Stand ein fünftes Ventil besitzen. Die Aufgabe des fünften Ventils ist die Schaffung eines zusätzlichen Druckniveaus zwischen P1 und Pi bzw. P2. Durch dieses zusätzliche Druckniveau kann bei höheren P2-Drücken und geringen P1-Drücken ein erhöhtes Recyclingpotential genutzt werden.

Für den Luftverbrauch maßgeblich entscheidend ist der Entlastdruck pex beim Beginn des Schaltens des Exhaustventils. Wenn dieser Druck sehr nahe am P1-Druckniveau liegt, bedeutet dies, dass intern der Druckaufbau das Maximum an recycelter Luft verwendet wird und der Luftverbrauch minimal ist.

Bei sehr geringem P2-Druckniveau und hohem P1-Druckniveau kann es jedoch derzeit schon mit nur einer Zwischenblasstufe vorkommen, dass intern pex sehr nahe an den P1-Druck rankommt und die zusätzliche Zwischenblasstufe der Contiform NX keinen Mehrwert mehr bieten kann.

Ein Nachteil des Stands der Technik bzw. der zweiten Zwischendruckstufe ist die verlängerte Dauer bis zum Erreichen des P2-Druckniveaus und die verlängerte Dauer beim Recyceln der Druckstufen. Durch die Tatsache, dass sich jede Druckstufe in der Flasche zu einem gewissen Maße ausbilden muss, und der physikalischen Gegebenheit, dass sich die Strömungsgeschwindigkeit kurz vor Erreichen der Druckstufe in der Flasche stark verlangsamt, wird ersichtlich, dass sowohl im Druckaufbau es zu einer Verlängerung des Druckaufbaus bis P2, als auch im Recycling, es zu einer Verlängerung der Recyclingdauer kommt, was zu einer Reduzierung der P2-Haltedauer führt.

Dies hat negative Auswirkungen auf die Flaschenqualität, ohne im Extremfall einen Vorteil im Luftverbrauch generieren zu können.

Auch muss nach derzeitigem Stand der Technik das P1-Recycling durch eine Vorblasdrossel strömen. Diese Vorblasdrossel hat die Aufgabe, den Volumenstrom beim Druckaufbau zu begrenzen. Beim Recycling wäre aber ein möglichst schneller Recyclingvorgang wünschenswert und die Vorblasdrossel dabei hinderlich.

Der vorliegenden Erfindung liegt daher die Aufgabe zugrunde, eine Minimierung eines Energie- und/oder Ressourcenverbrauchs während eines Umformens von Kunststoffvorformlingen zu Kunststoffflaschen auf kostengünstige Art und Weise zu ermöglichen.

Diese Aufgabe wird durch den Gegenstand der unabhängigen Ansprüche gelöst, nämlich unter anderem dadurch, dass
- jedem Druckniveau ein Druckreservoir zugeordnet ist,

wobei das Verfahren einen ersten und einen zweiten Betriebsmodus aufweist, wobei die jeweiligen Betriebsmodi wahlweise von einem Bediener, je nach Anforderung, ausgewählt werden, dadurch gekennzeichnet, dass in dem ersten Betriebsmodus, also in einem Quality Betrieb, eine Verbindung zwischen einem Ventilblock und einem Druckreservoir des zweiten Druckniveaus in nur eine Richtung, von einem Ventilblock in Richtung des Druckreservoir, also einem Druckluft- Recycling hergestellt wird ist, und
in einem zweiten Betriebsmodus, also einem Efficiency Ansatz, eine Verbindung zwischen dem Ventilblock und dem Druckreservoir des zweiten Druckniveaus in beide Richtungen, also von dem Ventilblock in Richtung des Druckreservoir und von dem Druckreservoir in Richtung des Ventilblocks, hergestellt wird.

Weitere Ausgestaltungen sind in den abhängigen Ansprüchen enthalten.

Gemäß zumindest einer Ausführungsform ist eine Verbindung zwischen dem Druckreservoir des ersten Druckniveaus und eine Verbindung zwischen dem Druckreservoir des zweiten Druckniveaus herstellbar und trennbar.

Gemäß zumindest einer Ausführungsform ist zwischen dem Druckreservoir des ersten Druckniveaus und dem Druckreservoir des zweiten Druckniveaus ein geregeltes und/oder ein gesteuertes Ventil, und/oder eine Paarung aus einem Absperrventil, und einem geregeltem und/oder gesteuertem Drosselventil, angeordnet ist.

Das kann heißen, dass am Ventilblock fünf Ventile (Vorblasen, zweimal Zwischenblasen, Fertigblasen und Exhaust) angeordnet sind.

Gemäß zumindest einer Ausführungsform ist während des Ausblasens Druckluft einzelner Druckstufen zumindest einer der Drücke derart mittels des Ventilblocks leitbar ist, dass zumindest ein Teil dieser Drücke recyclebar, das heißt unter anderem wiederherstellbar.

"Ausblasen" heißt in Zusammenhang mit der vorliegenden Erfindung, die Einführung von Druckluft einen Kunststoffvorformling, um dieses auf die Größe eines Behältnisses aufzublasen.

Das kann heißen, dass während eines Recycelns die zu recycelnde Druckluft derart mittels des Ventilblocks leitbar ist, dass die zu recycelnde Druckluft in ein Druckreservoir mit niedrigerem Druckniveau strömt. (... und dieses somit wieder auffüllt)

Gemäß zumindest einer Ausführungsform ist für die Erzeugung eines Druckniveaus innerhalb des Druckniveaus zugeordneten Druckreservoirs zumindest ein Ventil vorgesehen, sodass mittels einer Ansteuerung der Ventile die Druckniveaus erzeugt werden.

Gemäß zumindest einer Ausführungsform wird das zweite Druckniveau von einem einzigen Druckreservoir oder von mindestens zwei separaten Druckreservoirs bereitgestellt.

Bei einer Druckstufe kann es sich um einen Druckwert eines Fluids innerhalb eines Druckkanals handeln, wobei es sich bei einem Druckkanal um einen zumindest teilweise fluiddichtes Leitungsvolumen zur Leitung des Fluids handelt.

Gemäß zumindest einer Ausführungsform entspricht der zweite Druck einem Zwischenblasdruck, und/oder der zweite Druck entspricht einem p+-Druck innerhalb einer p+-Druckstufe oder aber der p+-Druck entspricht einem zusätzliche Zwischenblasdruck neben dem bereits vorhandenen oder anzufahrenden Zwischenblasdruck entspricht.

Gemäß zumindest einer Ausführungsform wird das zweite Druckniveau von einem einzigen Druckreservoir oder von mindestens zwei separaten Druckreservoirs bereitgestellt wird

Gemäß zumindest einer Ausführungsform ist das zusätzliche Ventil des p+-Druckkanals an demjenigen Ort des p+-Druckkanals angeordnet, welcher einer fluidischen Verbindung zwischen dem p+-Druckkanal und einem p1- und/oder p2-Druckanal entspricht, sodass ein Druck des p1-Druckkanals und/oder ein Druck des p2-Druckkanals über den p+-Druckkanal zumindest teilweise recycelt wird.

Gemäß zumindest einer Ausführungsform sind zumindest einer der Druckreservoirs, bevorzugt alle Druckreservoirs, mittels jeweils zumindest einem Ringkanal gebildet.

Gemäß zumindest einer Ausführungsform ist das Verbindungsventil ein Domdruckreglerventil oder ein geregeltes 2/2-Wege Ventil oder ein Absperrventil mit nachgelagerter geregelter Drossel.

Domdruckregler werden mittels Gasdruck betrieben. Im Gegensatz zu federbelasteten Druckreglern oder Druckminderern wird die zur Druckminderung benötigte Öffnungskraft des Ventils nicht durch eine Feder, sondern durch den Druck eines sogenannten Steuergases / Pilotgases erzeugt. Das zu regelnde Gas wird durch die Leitung in den Dom eingespeist, wo es auf einen Ventilsitz trifft. Das Steuergas wird über einen eingebauten Steuerdruckregler kontrolliert und so in die Druckkammer geleitet.

Hier wirkt es auf eine Membran, deren Hubbewegung über einen Membranteller auf den Ventilsitz übertragen wird. Das Ventil wird also durch den Druck des Steuergases und die entsprechende Hubbewegung der Membran je nach eingestelltem Arbeitsdruck geöffnet oder geschlossen und leitet das Gas in benötigter Menge durch. Überschüssiges Steuergas wird an der Hinterdruckseite über ein integriertes Gasrücktrittventil abgeführt. Domdruckregler-Sets können also geschlossene Systeme sein und ermöglichen jederzeit eine Erhöhung oder Absenkung des Arbeitsdrucks auch im laufenden Betrieb.

2/2-Wegeventile sind Öffnungs- und Schließventile, welche den Weg des Arbeitsmediums öffnen oder schließen. Diese Ventile können in Grundposition entweder geschlossen oder geöffnet sein. Dabei kann das 2/2 Wegeventil elektrisch, pneumatisch oder elektropneumatisch betrieben sein.

Gemäß zumindest einer Ausführungsform wird der p1-Druckkanal zumindest teilweise, vorzugsweise vollständig, über den p+-Druckkanal gespeist.

Die vorliegende Erfindung betrifft zusätzlich auch eine Vorrichtung zum Umformen von Kunststoffvorformlingen zu Kunststoffflaschen, wobei die Vorrichtung insbesondere dazu eingerichtet und dafür vorgesehen ist das Verfahren nach zumindest einem einer der vorhergehenden Ausführungsformen durchzuführen. Das kann heißen, dass alle für das hier beschriebene Verfahren offenbarten Merkmale auch für die hier beschriebene Vorrichtung offenbar sind und umgekehrt.

.Gemäß zumindest einer Ausführungsform handelt es sich bei vorliegender Erfindung um eine Vorrichtung zum Umformen von Kunststoffvorformlingen zu Kunststoffflaschen mit wenigstens einer Transporteinrichtung, an der eine Vielzahl von Umformungsstationen angeordnet sind, wobei jede dieser Umformungsstationen eine Blasform aufweist, welche jeweils zwei bezüglich einander zum Öffnen und Schließen der Blasform bewegliche Seitenteile sowie ein Bodenteil aufweisen, wobei an jeder Umformungsstation eine Reckstange angeordnet ist und, wobei die Vorrichtung weiterhin wenigstens eine Beaufschlagungseinrichtung aufweist, um die Kunststoffvorformlinge zu deren Expansion mit einem gasförmigen Medium zu beaufschlagen sowie eine Steuerungseinrichtung, welche die Beaufschlagung der Kunststoffvorformlinge mit dem gasförmigen Medium derart steuert, dass diese zunächst mit einem ersten Druckniveau, anschließend mit mindestens einem zweiten Druckniveau der oberhalb des ersten Druckniveaus liegt und schließlich mit einem dritten Druckniveau, der bevorzugt oberhalb des zweiten Druckniveaus liegt zu beaufschlagen, wobei jedem Druckniveau ein Druckreservoir zugeordnet ist,
wobei die Vorrichtung in zumindest einem ersten und einem zweiten Betriebsmodus betreibbar ist, wobei die jeweiligen Betriebsmodi wahlweise von einem Bediener, je nach Anforderung, auswählbar sind, und weiter wobei,
in dem ersten Betriebsmodus, also in einem Quality Betrieb, eine Verbindung zwischen einem Ventilblock und einem Druckreservoir des zweiten Druckniveaus in nur eine Richtung, von einem Ventilblock in Richtung des Druckreservoir, also einem Druckluft- Recycling herstellbar ist, und
in einem zweiten Betriebsmodus, also einem Efficiency Ansatz, eine Verbindung zwischen dem Ventilblock und dem Druckreservoir des zweiten Druckniveaus in beide Richtungen, also von dem Ventilblock in Richtung des Druckreservoir und von dem Druckreservoir in Richtung des Ventilblocks, herstellbar ist, insbesondere wobei das zweite Druckniveau (P+) von einem einzigen Druckreservoir oder von mindestens zwei separaten Druckreservoirs bereitgestellt wird.

Weitere Vorteile und Ausführungsformen ergeben sich aus den beigefügten Zeichnungen:

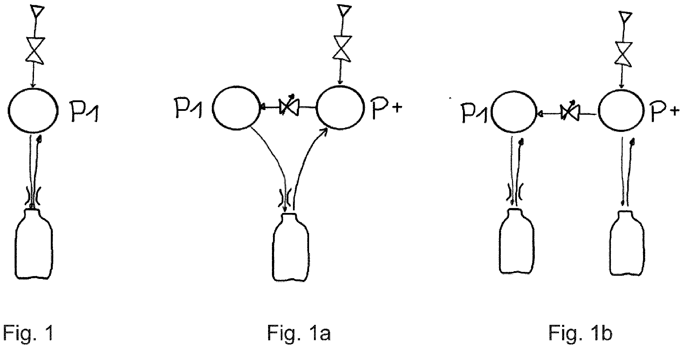

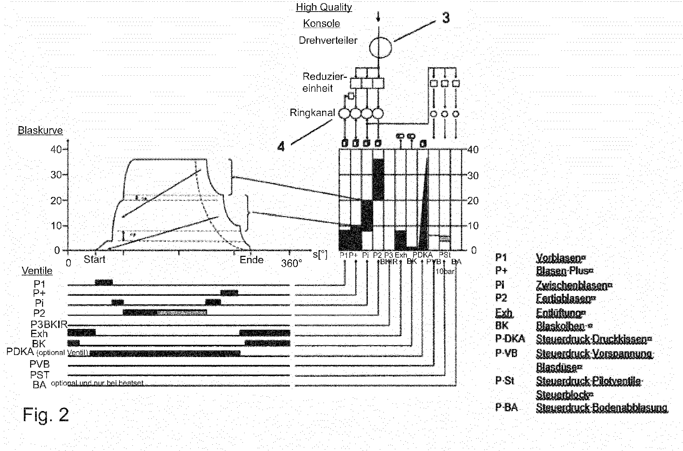

Die Figur 1 zeigt einen Ringkanal P1 nach dem heutigen Stand, wobei in der Figur 2a das hier erfindungsgemäße Konzept im Rahmen eines "Quality" Betriebsverfahrens sowie in der Figur 2b das hier beschriebene erfindungsgemäße Konzept im Rahmen eines "Efficience" Verfahrens mit den entsprechenden Pfeilen und den entsprechenden Ventilen dargelegt ist.

Der Ansatz ist, dass der Maschinenbediener bei gleicher Hardware die Möglichkeit hat, das fünfte Ventil und den dazugehörigen Ringkanal variabel einsetzen zu können. Falls es verfahrenstechnisch notwendig ist, kurze Anstiegszeiten und Recyclingzeiten zu haben, ist der Ansatz "Quality" zu wählen, bei dem das fünfte Ventil als Recyclingventil des P1-Druckniveaus verwendet wird. Dies hat zur Folge, dass beim Recycling des P1-Druckniveaus nicht durch die P1-Drossel recycelt werden muss und schnelleres P1-Recycing möglich ist. Auch fällt das zusätzliche zweite Zwischendruckniveau komplett weg. Des Weiteren besitzt das P1-Druckniveau durch den zweiten Ringkanal ein erhöhtes Volumen, was nachweißlich die Druckschwankungen im P1-Druckniveau reduziert und Schwankungen der Segmentgewichte verringert. Durch ein Zwischenventil zwischen p+ (fünftes Ventil) und p1 kann die Speisung der P1-Luft von der P+-Luft aus gesteuert/geregelt werden.

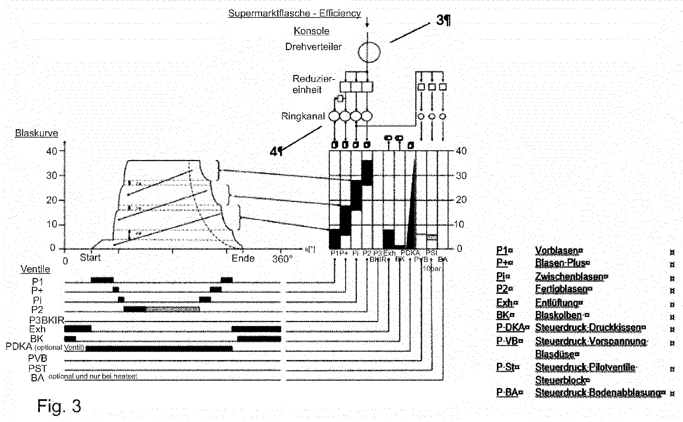

Der Figur 2 kann ein entsprechendes Druckverlaufsdiagramm im Rahmen eines "Quality" Verfahrens sowie ein, in der rechten oberen Teilfläche der Figur, schematischer Aufbau aus verschiedenen Ringkanälen (entspricht den Kreisen) sowie weiteren entsprechenden Reduziereinheiten und einem Drehverteiler (oberer großer Kreis der Figur 3) gezeigt werden.

Die einzelnen Druckverläufe, insbesondere die entsprechende Ansprache der einzelnen Ringkanäle ist über das Übertragungsdiagramm aus der Blaskurve in die entsprechenden Ansteuerungszeiten/ Ansteuerungsdrücke relativ zur Zeit t angegeben (siehe Gittermuster).

Ein entsprechender Efficiency Ansatz ist daher der Figur 3 auch zu entnehmen.

Bei gleicher Hardware, kann aber auch vom Maschinenbediener die Option "Efficiency" gezogen werden, wo mit p+ bzw. dem fünften Ventil ein zusätzliches zweites Zwischenblasdruckniveau aktiviert wird. Hier wird herkömmlich durch die P1-Drossel recycelt und jeder Ringkanal herkömmlich aufgeschaltet, sowohl in der Druck- als auch der Recyclingphase. Bei verfahrenstechnisch unkritischen Flaschen kann so das Maximum der Luft recycelt werden und damit der Luftverbrauch minimal gehalten werden. Das Zwischenventil zwischen p+ und p1 wird dabei geschlossen, sodass kein Luftaustausch stattfinden kann. Sollte aus unvorhergesehenen Gründen p1 mit Frischluft versorgt werden müssen, wird das Zwischenventil kurzzeitig geöffnet und Luft kann vom höheren Druckniveau p+ zu p1 fließen bis der Frischluftbedarf gedeckt ist.

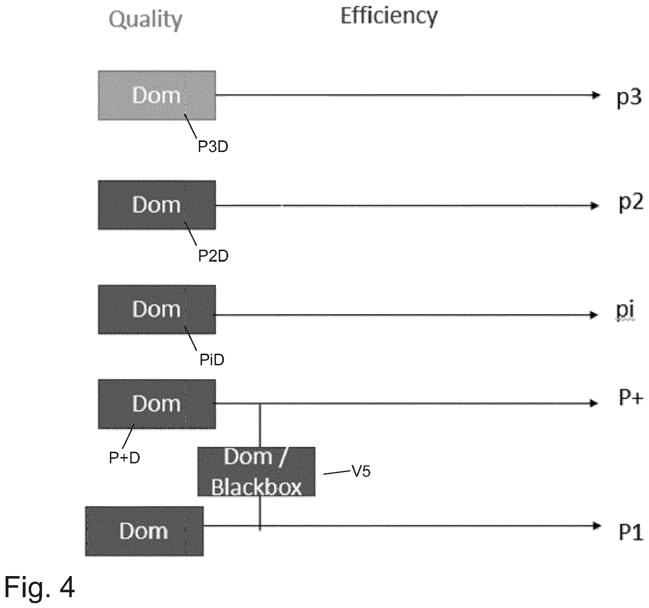

Bei der in Figur 4 gezeigten Konzept wird jeder Ringkanaldruck über einen Domdruckregler (P+D, P1...) mit Frischluft bei Bedarf gespeist. Bei P1-Druckniveau wäre auch ein Domdruckregler zur Speisung notwendig. Als Verbindung zwischen P+ und P1 wäre sowohl ein Wegeventil denkbar als auch ein herkömmlicher Domdruckregler, welcher dann nicht von Kompressorhochdruck auf das gewünschte P1-Druckniveau reduziert, sondern "nur" von P+-Druckniveau.

Beim Ansatz Quality mit direkter Verbindung der Ringkanäle P+ und P1 wäre das Blackboxventil/Dom zumindest zeitweise offen. Sprich ein Luft-/Druckaustausch zwischen p+ und P1 möglich. Beim Efficiency-Ansatz wäre das Blackboxventil/Dom geschlossen und jede Druckstufe würde "nur" über das reine Recycling der Blasluft befüllt. Falls eine Störung auftritt oder aber das Recycling nicht ausreicht, P1 komplett zu füllen, müsste der Dom in P1 kurzzeitig öffnen und einen Volumenstrom nach P1 strömen lassen. Dies hätte aber aufgrund des hohen Druckdeltas zwischen Kompressorhochdruck und P1-Druck eine erhöhte Schwankung in P1 zur Folge.

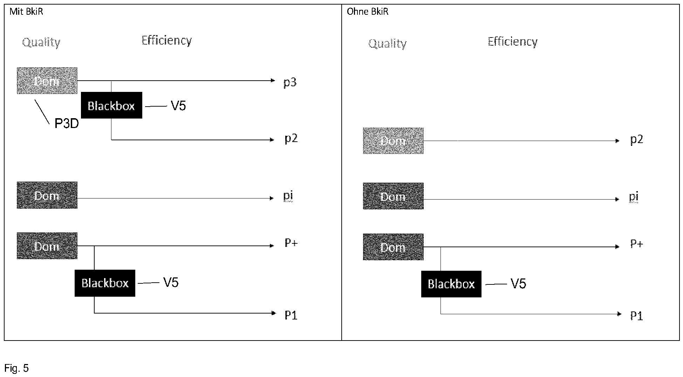

In Figur 5 wird ein zweites Konzept gezeigt, indem würde der Domdruckregler in P1 weggelassen und die Speisung des P1-Druckniveau nur aus dem P+-Druckniveau zugelassen. Das Konzept könnte noch ergänzt werden mit der P2-Speisung aus P3, um immer nur eine Anzahl von drei Domdruckreglern zu haben. Dies ist analog zum Efficiency- Ansatz des P1-Ringkanals zu sehen und wird im Folgenden nicht weiter beschrieben, wäre aber technisch möglich und durchaus sinnvoll.

Bei diesem Konzept wäre beim Ansatz Quality mit direkter Verbindung der Ringkanäle P+ und P1 das Blackboxventil zumindest zeitweise, bevorzugt dauerhaft, offen. Sprich, ein Luft-/Druckaustausch zwischen p+ und P1 möglich. Beim Efficiency-Ansatz wäre das Blackboxventil geschlossen und jede Druckstufe würde "nur" über das reine Recycling der Blasluft befüllt. Falls eine Störung auftritt oder aber das Recycling nicht ausreicht, P1 komplett zu füllen, müsste das Blackboxventil kurzzeitig öffnen und Luft von p+ nach P1 strömen lassen. Die Schwankung des p+-Ringkanals wäre damit zwar erhöht, jedoch verfahrenstechnisch nicht so kritisch zu sehen, wie im p1-Ringkanal.

Aktuell gibt es im Standardprozess, insbesondere ohne Blasreycling drei Druckstufen. P1 als Vorblasdruckniveau, Pi als Zwischenblasdruckniveau und P2 als Fertigblasdruckniveau. Jedes dieser Druckniveaus besitzt einen in zumindest einer Ausführungsform eigenen Ringkanal und ein Ventil am einem Ventilblock der Blasstation, um den Druck in einen Kunststoffvorformling und/oder eine Flasche zu leiten.

Der unter anderem auch hier vorgestellte Ventilblock soll nach einer erfindungsgemäßen Ausführungsform ein Verbindungsventil, auch als fünftes Ventil besitzen.

Die Aufgabe des Verbindungsventils ist in zumindest einer Ausführungsform die Schaffung eines zusätzlichen Druckniveaus zwischen den Drücken P1 und Pi bzw. P2. Durch dieses zusätzliche Druckniveau kann bei höheren P2-Drücken und geringen P1-Drücken ein erhöhtes Recyclingpotential genutzt werden.

Für den Luftverbrauch maßgeblich entscheidend ist der Entlastdruck pex beim Beginn des Schaltens des Exhaustventils. Wenn dieser Druck sehr nahe am P1-Druckniveau liegt, bedeutet dies, dass intern für den Druckaufbau das Maximum an recycelter Luft verwendet wird und der Luftverbrauch minimal ist.

Auch wird im Übrigen durch die Verbindung ein Nachteil des Stands der Technik überwunden, nämlich, dass bisher die zweite Zwischendruckstufe, die verlängert ist, und dadurch eine Dauer bis zum Erreichen des P2-Druckniveaus und die verlängerte Dauer beim Recyceln der Druckstufen den Blasprozess verlangsamt. Durch die Tatsache, dass sich jede Druckstufe in der Flasche zu einem gewissen Maße ausbilden muss und der physikalischen Gegebenheit, dass sich die Strömungsgeschwindigkeit kurz vor Erreichen der Druckstufe in der Flasche stark verlangsamt, wird ersichtlich, dass sowohl im Druckaufbau es zu einer Verlängerung des Druckaufbaus bis P2 als auch im Recycling es zu einer Verlängerung der Recyclingdauer kommt, was zu einer Reduzierung der P2-Haltedauer führt.

Dies hat negative Auswirkungen auf die Flaschenqualität, ohne im Extremfall einen Vorteil im Luftverbrauch generieren zu können.

Auch muss nach derzeitigem Stand der Technik das P1-Recycling durch eine Vorblasdrossel strömen. Diese Vorblasdrossel hat die Aufgabe, den Volumenstrom beim Druckaufbau zu begrenzen. Beim Recycling wäre aber ein möglichst schneller Recyclingvorgang wünschenswert und die Vorblasdrossel dabei hinderlich.

Kurz zusammengefasst weist der Stand der Technik die folgenden Nachteile auf:
- Bei Hinzunahme des fünften Ventils als Zwischenblasstufe kommt es zu einer Verkürzung der P2-Haltephase
- Recycling von P1-Luft durch Vorblasdrossel führt zu verlängerten Recyclingzeiten

Ein Kernpunkt der Erfindung ist nun, das fünfte Ventil während des Blasprozesses variabel einzustellen.

Ein Ansatz daher ist, das fünfte Ventil als Recyclingventil von P1, also der Druckstufe P1 einzusetzen, sodass in zumindest einer möglichen Ausführungsform zwischen einem Ringkanal des fünften Ventils und einem P1-Ringkanal eine Verbindung existiert und dabei das fünfte Ventil einen Zwischendruck aufbringt und die Verbindung zu P1, also der P1 Druckstufe getrennt wird.

Dabei wird der Ansatz verfolgt, dass der Maschinenbediener bei unveränderter Hardware die Möglichkeit hat, das fünfte Ventil und den dazugehörigen Ringkanal variabel einsetzen zu können.

Falls es verfahrenstechnisch nämlich notwendig ist, kurze Anstiegszeiten und Recyclingzeiten zu haben, ist der Ansatz "Quality" zu wählen, bei dem das fünfte Ventil als Recyclingventil des P1-Druckniveaus (= P1 Druckstufe) verwendet wird.

Dies hat zur Folge, dass beim Recycling des P1-Druckniveaus nicht durch die P1-Drossel recycelt werden muss und schnelleres P1-Recycing möglich ist. Auch fällt ein zusätzliches zweites Zwischendruckniveau vollkommen weg.

Des Weiteren besitzt das P1-Druckniveau durch den zweiten Ringkanal (also den p+ Ringkanal) ein erhöhtes Volumen, was nachweißlich die Druckschwankungen im P1-Druckniveau reduziert und Schwankungen von Segmentgewichten verringert.

Durch ein Zwischenventil zwischen p+ (fünftes Ventil) und p1 kann die Speisung der P1-Luft von der P+-Druckstufe aus gesteuert/geregelt werden.

Bei gleicher Hardware kann aber auch vom Maschinenbediener die Option "Efficiency" gewählt werden, bei welcher mit p+ bzw. dem fünften Ventil ein zusätzliches zweites Zwischenblasdruckniveau aktiviert wird. Hierbei wird herkömmlich durch die P1-Drossel recycelt und jeder Ringkanal herkömmlich aufgeschaltet, sowohl in der Druck- als auch der Recyclingphase.

Bei verfahrenstechnisch unkritischen Flaschen kann so das Maximum der Luft recycelt werden und damit der Luftverbrauch minimal gehalten werden. Das Zwischenventil zwischen der p+-Druckstufe und der p1-Druckstufe wird dabei geschlossen, sodass kein Luftaustausch stattfinden kann. Sollte aus unvorhergesehenen Gründen der p1-Druckkanal mit Frischluft versorgt werden müssen, wird das Zwischenventil kurzzeitig geöffnet und Luft kann vom höheren Druckniveau p+ zu p1 fließen, bis der Frischluftbedarf gedeckt ist.

Um das obige Verfahren umzusetzen, existieren mehrere Umsetzungskonzepte:
Im Folgenden werden zwei vielversprechende Ansätze beschrieben. Das Ziel ist es, dass die Ringkanäle P1 und P+ in direkter Verbindung stehen können und gleichzeitig diese Verbindung getrennt werden kann. Dies wäre auch mit anderen Druckstufen denkbar, aber nur bei diesen Ringkanälen wird dies im Folgenden beispielhaft beschrieben.

Diese Verbindung der Ringkanäle kann durch bspw. ein 2/2-Wegeventil, welches 40bar stabil ist, ausgeführt werden. Auch ein Domdruckregler wäre als Absperreinrichtung denkbar.

### Ausführungsform 1:

In dem hier gezeigten Konzept wird jeder Ringkanaldruck über einen Domdruckregler mit Frischluft bei Bedarf gespeist. Bei P1-Druckniveau wäre auch ein Domdruckregler zur Speisung notwendig. Als Verbindung zwischen dem P+-Druckkanal und dem P1-Druckkanal wäre sowohl ein Wegeventil denkbar, als auch ein Domdruckregler, welcher dann nicht von Kompressorhochdruck auf das gewünschte P1-Druckniveau reduziert, sondern "nur" von P+-Druckniveau.

Beim Ansatz "Quality", mit direkter Verbindung der Ringkanäle P+ und P1, wäre das Ventil zumindest zeitweise offen. Sprich, ein Luft-/Druckaustausch zwischen p+ und P1 wäre möglich.

Beim "Efficiency"-Ansatz wäre das Ventil geschlossen und jede Druckstufe würde "nur" über das reine Recycling der Blasluft befüllt. Falls eine Störung auftritt oder aber das Recycling nicht ausreicht, P1 komplett zu füllen, müsste der Dom in P1 kurzzeitig öffnen und einen Volumenstrom nach P1 strömen lassen. Dies hätte aber aufgrund des hohen Druckdeltas zwischen Kompressorhochdruck und P1-Druck eine erhöhte Schwankung in P1 zur Folge.

### Ausführungsform 2:

Die zweite Ausführungsform würde den Domdruckregler im P1-Druckkanal weglassen und die Speisung des P1-Druckniveau nur aus dem P+-Druckniveau zulassen. Das Konzept könnte noch ergänzt werden mit der P2-Speisung aus P3, um immer nur eine Anzahl von drei Domdruckreglern zu haben. Dies ist analog zum "Efficiency"-Ansatz des P1-Ringkanals zu sehen und wird im Folgenden nicht weiter beschrieben, wäre aber technisch möglich und durchaus sinnvoll.

In zumindest einer weiteren Ausführungsform wäre denkbar, dass beim Ansatz "Quality" mit direkter Verbindung der Ringkanäle P+ und P1 das Ventil zumindest zeitweise, bevorzugt dauerhaft, offen ist. Sprich, ein Luft-/Druckaustausch zwischen p+ und P1 wäre möglich. Beim "Efficiency"-Ansatz wäre das Ventil dann geschlossen und jede Druckstufe würde "nur" über das reine Recycling der Blasluft befüllt. Falls eine Störung auftritt oder aber das Recycling nicht ausreicht, P1 komplett zu füllen, müsste das Ventil kurzzeitig öffnen und Luft von p+ nach P1 strömen lassen. Die Schwankung des p+-Ringkanals wäre damit zwar erhöht, jedoch verfahrenstechnisch nicht so kritisch zu sehen, wie im p1-Ringkanal.

Dabei kann kurz zusammengefasst die oben genannte Erfindung folgende Vorteile aufweisen:
- Maximale Flexibilität durch individuelle Verwendung des fünften Ventils,
- Wegfallen des P1-Domdruckreglers und bessere Stabilität des P1-Druckniveaus im "Quality"-Ansatz:
- Höhere P1 Stabilität aufgrund "Pufferkanal" und wegfallen der Recyclingstufe in P1
- Tiefere P1-Druckniveaus aufgrund besserer Stabilität
- Nur eine Zwischenblasstufe
- Schnelleres "P1"-Recycling aufgrund Wegfalles der Drossel bei Recycling von P1 Luft
- Hardwaretechnisch keine Änderung gegenüber "Efficiency"-Ausführung
- Bei Flaschen mit erhöhten Anforderungen und höherem P1-Druck sinnvolle Verwendung des fünften. Ventils möglich
- Bei jedem Ansatz ist der Luftverbrauch optimiert, sind die Betriebskosten minimal und es muss kein großer Umbau der Anlage durchgeführt werden.

### Bezugszeichenliste

- 1: Vorrichtung
- 2: Transporteinrichtung
- 3: Drehverteiler
- 5: Reduziereinheiten
- 4: Ringkanal
- 10: Kunststoffflasche (auch Kunststoffvorformling)
- 10a: Behältnisboden
- 14: Blasformseitenteil
- 16: Trägerschale
- 18: Bodenteil
- 15: Hohlraum
- 20: Umformungsstationen
- 32: Blasdüse
- 34: stangenartiger Körper, Reckstange
- 36: Antriebseinrichtung zur Bewegung des Bodenteils 18
- 52: Kurve des Druckverlaufs
- 54: Verlauf der Reckstangenbewegung
- 56: Verlauf der Bewegung des Bodenteils
- P1: erster Druck, Vorblasdruck
- Pi: zweiter Druck, Zwischenblasdruck
- P2: dritter Druck, Fertigblasdruck
- Sp: Spüldruck
- E: Entlastung(sdruck)
- P0, P10: Positionen der Reckstange
- Z: Drehachse
- P: Transportpfad
- WP1,WP2: Wendepunkte der Druckverlaufskurve
- L: Längsrichtung
- V5: Verbindungsventil
- P+D: Domdruckregler
- PiD: Domdruckregler
- P1D: Domdruckregler
- P2D: Domdruckregler
- P3D: Domdruckregler

## Patentansprüche

1. Verfahren zum Umformen von Kunststoffvorformlingen zu Kunststoffflaschen mit den Schritten:
- Einbringen eines zu expandierenden Kunststoffvorformlings (10) in eine Blasform, wobei diese Blasform wenigstens zwei Seitenteile (14) und ein Bodenteil (18) aufweist;
- Einführen einer Reckstange (34) durch die Mündung des Kunststoffvorformlings (10) in das Innere des Kunststoffvorformlings (10), um diesen in seiner Längsrichtung (L) zu dehnen;
- Beaufschlagen des Kunststoffvorformlings (10) mit einem ersten Druckniveau (P1);
- Beaufschlagen des Kunststoffvorformlings (10) mit mindestens einem zweiten Druckniveau (P+, Pi), wobei das zweite Druckniveau (P+, Pi) von dem ersten Druckniveau (P1) abweicht und bevorzugt höher als das erste Druckniveau (P1) ist,
- Beaufschlagen des Kunststoffvorformlings (10) mit einem dritten Druckniveau (P2), wobei dieses dritte Druckniveau (P2) von dem zweiten Druckniveau (P+) abweicht und bevorzugt höher als das zweite Druckniveau (P+) ist,
wobei jedem Druckniveau ein Druckreservoir zugeordnet ist,
wobei das Verfahren einen ersten und einen zweiten Betriebsmodus aufweist,
wobei die jeweiligen Betriebsmodi wahlweise von einem Bediener, je nach Anforderung, ausgewählt werden,
**dadurch gekennzeichnet, dass**
in dem ersten Betriebsmodus, also in einem Quality Betrieb, eine Verbindung zwischen einem Ventilblock und einem Druckreservoir des zweiten Druckniveaus (P+, Pi) in nur eine Richtung, von einem Ventilblock in Richtung des Druckreservoir, also einem Druckluft- Recycling hergestellt wird ist, und
in einem zweiten Betriebsmodus, also einem Efficiency Ansatz, eine Verbindung zwischen dem Ventilblock und dem Druckreservoir des zweiten Druckniveaus (P+, Pi) in beide Richtungen, also von dem Ventilblock in Richtung des Druckreservoir und von dem Druckreservoir in Richtung des Ventilblocks, hergestellt wird.

2. Verfahren nach Anspruch 1,
**dadurch gekennzeichnet, dass**
eine Verbindung zwischen dem Druckreservoir des ersten Druckniveaus und eine Verbindung zwischen dem Druckreservoir des zweiten Druckniveaus herstellbar und trennbar ist.

3. Verfahren nach Anspruch 1 oder 2,
**dadurch gekennzeichnet, dass**
zwischen dem Druckreservoir des ersten Druckniveaus und dem Druckreservoir des zweiten Druckniveaus ein geregeltes und/oder ein gesteuertes Ventil und/oder eine Paarung aus einem Absperrventil und einem geregeltemund/oder gesteuertem Drosselventilangeordnet ist.

4. Verfahren nach zumindest einem der vorhergehenden Ansprüche,
**dadurch gekennzeichnet, dass**
während eines Ausblasens Druckluft einzelner Druckstufen zumindest einer der Drücke (P2, Pi, P1) derart mittels des Ventilblocks leitbar ist, dass zumindest ein Teil dieser Drücke recyclebar, das heißt unter anderem wiederherstellbar.

5. Verfahren nach zumindest einem der vorhergehenden Ansprüche,
**dadurch gekennzeichnet, dass**
Druckkanäle mindestens zwei Druckreservoirs über ein Verbindungsventil (V5) miteinander verbindbar und/oder verbunden sind, sodass mittels dieses eines dem Verbindungsventil (V5) zugeordneter Druckanales zumindest zwei Drücke von Druckkanälen zueinander gesteuert und/oder geregelt recyclebar sind, insbesondere wobei eine Befüllung zweier Druckluftreservoirs über ein einziges Ventil, zum Beispiel das Verbindungsventil (V5) erfolgt.

6. Verfahren nach zumindest einem der vorhergehenden Ansprüche,
**dadurch gekennzeichnet, dass**
für die Erzeugung eines Druckniveaus innerhalb eines des Druckniveaus zugeordneten Druckreservoirs zumindest ein Ventil vorgesehen ist, sodass mittels einer Ansteuerung der Ventile die Druckniveaus erzeugt werden.

7. Verfahren nach wenigstens einem der vorangegangenen Ansprüche,
**dadurch gekennzeichnet, dass**
das zweite Druckniveau (P+) von einem einzigen Druckreservoir oder von mindestens zwei separaten Druckreservoirs bereitgestellt wird.

8. Verfahren nach wenigstens einem der vorangegangenen Ansprüche,
**dadurch gekennzeichnet, dass**
das Verbindungsventil ein Domdruckreglerventil oder ein geregeltes 2/2-Wege Ventil oder ein Absperrventil mit nachgelagerter geregelter Drossel ist.

9. Verfahren nach wenigstens einem der vorangegangenen Ansprüche,
**dadurch gekennzeichnet, dass**
der P1-Druckkanal zumindest teilweise, vorzugsweise vollständig, über den P+-Druckkanal gespeist wird.

10. Vorrichtung zum Umformen von Kunststoffvorformlingen zu Kunststoffflaschen mit wenigstens einer Transporteinrichtung (2), an der eine Vielzahl von Umformungsstationen (20) angeordnet ist, wobei jede dieser Umformungsstationen eine Blasform aufweist, welche jeweils zwei bezüglich einander zum Öffnen und Schließen der Blasform bewegliche Seitenteile (14) sowie ein Bodenteil (18) aufweisen, wobei an jeder Umformungsstation eine Reckstange angeordnet ist und wobei die Vorrichtung (1) weiterhin wenigstens eine Beaufschlagungseinrichtung aufweist, um die Kunststoffvorformlinge zu deren Expansion mit einem gasförmigen Medium zu beaufschlagen sowie eine Steuerungseinrichtung, welche die Beaufschlagung der Kunststoffvorformlinge mit dem gasförmigen Medium derart steuert, dass diese zunächst mit einem ersten Druckniveau (P1), anschließend mit mindestens einem zweiten Druckniveau (Pi) der oberhalb des ersten Druckniveaus (P1) liegt und schließlich mit einem dritten Druckniveau (P2), der bevorzugt oberhalb des zweiten Druckniveaus (Pi) liegt zu beaufschlagen, wobei
jedem Druckniveau ein Druckreservoir zugeordnet ist,
wobei die Vorrichtung in zumindest einem ersten und einem zweiten Betriebsmodus betreibbar ist, wobei die jeweiligen Betriebsmodi wahlweise von einem Bediener, je nach Anforderung, auswählbar sind, und weiter wobei,
in dem ersten Betriebsmodus, also in einem Quality Betrieb, eine Verbindung zwischen einem Ventilblock und einem Druckreservoir des zweiten Druckniveaus in nur eine Richtung, von einem Ventilblock in Richtung des Druckreservoir, also einem Druckluft- Recycling herstellbar ist, und in einem zweiten Betriebsmodus, also einem Efficiency Ansatz, eine Verbindung zwischen dem Ventilblock und dem Druckreservoir des zweiten Druckniveaus in beide Richtungen, also von dem Ventilblock in Richtung des Druckreservoir und von dem Druckreservoir in Richtung des Ventilblocks, herstellbar ist, insbesondere wobei das zweite Druckniveau (P+) von einem einzigen Druckreservoir oder von mindestens zwei separaten Druckreservoirs bereitgestellt wird.

## Claims

1. A method of forming plastic preforms into plastic bottles comprising the steps:
- placing a plastic preform (10) to be expanded in a blow mould, wherein said blow mould comprising at least two side parts (14) and a bottom part (18);
- inserting a stretching rod (34) through the mouth of the plastic preform (10) into the interior of the plastic preform (10) to stretch it in its longitudinal direction (L);
- applying a first pressure level (P1) to the plastic preform (10);
- applying the plastic preform (10) with at least one second pressure level (P+, Pi), wherein the second pressure level (P+, Pi) differs from the first pressure level (P1) and is preferably higher than the first pressure level (P1);
- applying the plastic preform (10) with a third pressure level (P2), wherein this third pressure level (P2) differing from the second pressure level (P+) and preferably being higher than the second pressure level (P+);
wherein a pressure reservoir is assigned to each pressure level,
wherein the method comprises a first and a second mode of operation, wherein the respective modes of operation being selectively chosen by an operator as required,
**characterised in that**
in the first operating mode, i.e. in a quality operation, a connection is established between a valve block and a pressure reservoir of the second pressure level (P+, Pi) in only one direction, from a valve block towards the pressure reservoir, i.e. a compressed air recycling, and
in a second operating mode, i.e. an efficiency approach, a connection is established between the valve block and the pressure reservoir of the second pressure level (P+, Pi) in both directions, i.e. from the valve block towards the pressure reservoir and from the pressure reservoir towards the valve block.

2. Method according to claim 1,
**characterised in that**
a connection between the pressure reservoir of the first pressure level and a connection between the pressure reservoir of the second pressure level can be established and separated.

3. Method according to claim 1 or 2,
**characterised in that**
a regulated and/or controlled valve and/or a pairing of a shut-off valve and a regulated and/or controlled throttle valve is arranged between the pressure reservoir of the first pressure level and the pressure reservoir of the second pressure level.

4. Method according to at least one of the preceding claims,
**characterised in that**
during a blow-out, compressed air of individual pressure levels of at least one of the pressures (P2, Pi, P1) can be conducted by means of the valve block in such a way that at least a part of these pressures can be recycled, i.e. inter alia recovered.

5. Method according to at least one of the preceding claims,
**characterised in that**
pressure channels, at least two pressure reservoirs can be connected to one another and/or are connected via a connecting valve (V5), so that at least two pressures of pressure channels can be controlled and/or recycled in a regulated manner with respect to one another by means of a pressure channel assigned to the connecting valve (V5), in particular wherein two pressure reservoirs are filled via a single valve, for example the connecting valve (V5).

6. Method according to at least one of the preceding claims,
**characterised in that**
at least one valve is provided for generating a pressure level within a pressure reservoir associated with the pressure level, so that the pressure levels are generated by means of a control of the valves.

7. Method according to at least one of the preceding claims,
**characterised in that**
the second pressure level (P+) is provided by a single pressure reservoir or by at least two separate pressure reservoirs.

8. Method according to at least one of the preceding claims,
**characterised in that**
the connecting valve is a dome pressure regulator valve or a regulated 2/2-way valve or a shut-off valve with downstream regulated throttle.

9. Method according to at least one of the preceding claims,
**characterised in that**
the P1 pressure channel is fed at least partially, preferably completely, via the P+ pressure channel.

10. Apparatus for forming plastic preforms into plastic bottles, having at least one transport device (2) on which a plurality of forming stations (20) are arranged, wherein each of these forming stations having a blow mould which in each case has two side parts (14), which can be moved with respect to one another in order to open and close the blow mould, and a bottom part (18), wherein a stretching bar being arranged at each forming station, and wherein the apparatus (1) furthermore having at least one application device (10) for applying the plastic preforms with a gaseous medium in order to expand them, and a control device which controls the application of the plastic preforms with the gaseous medium in such a way that they are first applied with a first pressure level (P1), then with at least one second pressure level (Pi), which is above the first pressure level (P1), and finally with a third pressure level (P2), which is preferably above the second pressure level (Pi), wherein
a pressure reservoir is assigned to each pressure level,
wherein the apparatus is operable in at least a first and a second operating mode, wherein the respective operating modes being selectable by an operator as required, and further wherein,
in the first operating mode, i.e. in a quality mode, a connection can be established between a valve block and a pressure reservoir of the second pressure level in only one direction, from a valve block in the direction of the pressure reservoir, i.e. a pressure recycling, and in a second operating mode, i.e. an efficiency approach, a connection can be established between the valve block and the pressure reservoir of the second pressure level in both directions, i. e. form the valve block in the direction of the pressure reservoir and from the pressure reservoir in the direction of the valve block, in particular wherein the second pressure level (P+) is provided by a single pressure reservoir or by at least two separate pressure reservoirs.

## Revendications

1. Procédé de formage d'ébauches en matière plastique en bouteilles en matière plastique avec les étapes suivantes :
- l'introduction d'une ébauche en matière plastique (10) à expanser dans un moule de soufflage, dans lequel ce moule de soufflage présente au moins deux parties latérales (14) et une partie de fond (18) ;
- l'insertion d'une tige d'étirage (34) par l'embouchure de l'ébauche en matière plastique (10) à l'intérieur de l'ébauche en matière plastique (10) afin d'étirer celle-ci dans son sens longitudinal (L) ;
- l'alimentation de l'ébauche en matière plastique (10) en un premier niveau de pression (P1) ;
- l'alimentation de l'ébauche en matière plastique (10) en au moins un deuxième niveau de pression (P+, Pi), dans lequel le deuxième niveau de pression (P+, Pi) diverge du premier niveau de pression (P1) et est de préférence supérieur au premier niveau de pression (P1),
- l'alimentation de l'ébauche en matière plastique (10) en un troisième niveau de pression (P2), dans lequel ce troisième niveau de pression (P2) diverge du deuxième niveau de pression (P+) et est de préférence supérieur au deuxième niveau de pression (P+), dans lequel un réservoir de pression est associé à chaque niveau de pression,
dans lequel le procédé présente un premier et un second mode de fonctionnement,
dans lequel les modes de fonctionnement respectifs sont sélectionnés au choix par un utilisateur, selon l'exigence,
**caractérisé en ce que**
dans le premier mode de fonctionnement, donc dans un mode de qualité, une liaison entre un bloc soupapes et un réservoir de pression du deuxième niveau de pression (P+, Pi) est établie dans une seule direction, d'un bloc soupapes en direction du réservoir de pression, donc un recyclage d'air comprimé, et
dans un second mode de fonctionnement, donc une approche d'efficience, une liaison entre le bloc soupapes et le réservoir de pression du deuxième niveau de pression (P+, Pi) est établie dans les deux directions, donc du bloc soupapes en direction du réservoir de pression et du réservoir de pression en direction du bloc soupapes.

2. Procédé selon la revendication 1,
**caractérisé en ce que**
une liaison entre le réservoir de pression du premier niveau de pression et une liaison entre le réservoir de pression du deuxième niveau de pression peuvent être établies et séparées.

3. Procédé selon la revendication 1 ou 2,
**caractérisé en ce que**
une soupape régulée et/ou une soupape commandée et/ou un appariement d'une soupape de blocage et d'une soupape d'étranglement régulée et/ou commandée est agencée entre le réservoir de pression du premier niveau de pression et le réservoir de pression du deuxième niveau de pression.

4. Procédé selon au moins l'une quelconque des revendications précédentes,
**caractérisé en ce que**
pendant un soufflage, de l'air comprimé d'étages de pression individuels au moins d'une des pressions (P2, Pi, P1) peut être acheminé au moyen du bloc soupapes de telle manière qu'au moins une partie de ces pressions puisse être recyclée, c'est-à-dire récupérée entre autres.

5. Procédé selon au moins l'une quelconque des revendications précédentes,
**caractérisé en ce que**
des canaux de pression au moins de deux réservoirs de pression peuvent être reliés et/ou sont reliés par le biais d'une soupape de liaison (V5) entre eux de sorte qu'au moyen de ce un canal de pression associé à la soupape de liaison (V5), au moins deux pressions de canaux de pression peuvent être recyclées de manière commandée et/ou régulée l'une par rapport à l'autre, en particulier dans lequel un remplissage de deux réservoirs d'air comprimé est effectué par le biais d'une seule soupape, par exemple la soupape de liaison (V5).

6. Procédé selon au moins l'une quelconque des revendications précédentes,
**caractérisé en ce que**
au moins une soupape est prévue pour la génération d'un niveau de pression à l'intérieur d'un réservoir de pression associé aux niveaux de pression de sorte que les niveaux de pression soient générés au moyen d'une commande des soupapes.

7. Procédé selon au moins l'une quelconque des revendications précédentes,
**caractérisé en ce que**
le deuxième niveau de pression (P+) est fourni par un seul réservoir de pression ou par au moins deux réservoirs de pression séparés.

8. Procédé selon au moins l'une quelconque des revendications précédentes,
**caractérisé en ce que**
la soupape de liaison est une soupape de régulation de pression à dôme ou une soupape 2/2 voies régulée ou une soupape de blocage avec un étranglement régulé logé en aval.

9. Procédé selon au moins l'une quelconque des revendications précédentes,
**caractérisé en ce que**
le canal de pression P1 est alimenté au moins partiellement, de préférence complètement, par le biais du canal de pression P+.

10. Dispositif de formage d'ébauches en matière plastique en bouteilles en matière plastique avec au moins un dispositif de transport (2), au niveau duquel une pluralité de postes de formage (20) est agencée, dans lequel chacun de ces postes de formage présente un moule de soufflage qui présente respectivement deux parties latérales (14) mobiles l'une par rapport à l'autre pour l'ouverture et la fermeture du moule de soufflage ainsi qu'une partie de fond (18), dans lequel une tige d'étirage est agencée au niveau de chaque poste de formage et dans lequel le dispositif (1) présente en outre au moins un dispositif d'alimentation afin d'alimenter les ébauches en matière plastique pour leur expansion en un milieu gazeux ainsi qu'un dispositif de commande qui commande l'alimentation des ébauches en matière plastique en milieu gazeux de manière à alimenter ceux-ci tout d'abord en un premier niveau de pression (P1), ensuite en au moins un deuxième niveau de pression (Pi) qui se trouve au-dessus du premier niveau de pression (P1) et finalement en un troisième niveau de pression (P2) qui se trouve de préférence au-dessus du deuxième niveau de pression (Pi), dans lequel
un réservoir de pression est associé à chaque niveau de pression,
dans lequel le dispositif peut fonctionner dans au moins un premier et un second mode de fonctionnement, dans lequel les modes de fonctionnement respectifs peuvent être sélectionnés au choix par un utilisateur, selon l'exigence, et en outre dans lequel
dans le premier mode de fonctionnement, donc dans un mode de qualité, une liaison entre un bloc soupapes et un réservoir de pression du deuxième niveau de pression peut être établie dans une seule direction, d'un bloc soupapes en direction du réservoir de pression, donc un recyclage d'air comprimé, et dans un second mode de fonctionnement, donc une approche d'efficience, une liaison entre le bloc soupapes et le réservoir de pression du deuxième niveau de pression peut être établie dans les deux directions, donc du bloc soupapes en direction du réservoir de pression et du réservoir de pression en direction du bloc de soupapes, en particulier dans lequel le deuxième niveau de pression (P+) est fourni par un seul réservoir de pression ou par au moins deux réservoirs de pression séparés.
